# EUROPÄISCHE PATENTSCHRIFT

(11) **EP 3 763 181 B1**
(45) Veröffentlichungstag und Bekanntmachung des Hinweises auf die Patenterteilung: **11.09.2024**
(21) Anmeldenummer: 20185127.6
(22) Anmeldetag: 10.07.2020
(51) Int. Cl.: A01B 73/04, A01B 73/06, A01D 57/20, A01D 75/18, A01D 84/00

(54) **ERNTEVORRICHTUNG**
HARVESTING DEVICE
DISPOSITIF DE RÉCOLTE

(30) Priorität: 10.07.2019 DE 102019118739
(43) Veröffentlichungstag der Anmeldung: 13.01.2021
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- DE-A1- 10 234 741
- US-A1- 2005 172 598
- US-A1- 2015 020 492
- US-A1- 2015 327 428

## Beschreibung

Die Erfindung betrifft eine Erntevorrichtung, nämlich einen Merger oder Pickup-Schwader.

Aus der EP 2 979 529 B1 ist eine als Merger ausgebildete Erntevorrichtung bekannt. Merger werden auch als Pickup-Schwader bezeichnet. Gemäß diesem Stand der Technik verfügt die als Merger ausgebildete Erntevorrichtung über einen Tragrahmen sowie über ein Fahrwerk. Ferner verfügt die als Merger ausgebildete Erntevorrichtung über als Pickup ausgebildete Aufnahmeorgane zum Aufnehmen von Erntegut sowie über als Bandförderer ausgebildete Querfördereinrichtungen zum Querfördern des aufgenommenen Ernteguts. Der Tragrahmen verfügt über einen Längsträger sowie über Querträger, wobei die Aufnahmeorgane und Querfördereinrichtungen an den Querträgern aufgenommen sind. Um die aus der EP 2 979 529 B1 bekannte, als Merger ausgebildete Erntevorrichtung zwischen einer Arbeitsstellung und einer Transportstellung zu überführen, sind die Aufnahmeorgane und Querförderer zunächst aus ihrer Arbeitsstellung heraus um eine horizontale Achse nach oben klappbar, wobei anschließend die nach oben geklappten Aufnahmeorgane und Querfördereinrichtungen um eine vertikale Achse nach vorne klappbar sind.

Aus US 2015/0327428 A1 ist ein Merger bekannt, der als Pickup ausgebildete Aufnahmeorgane und als Bandförderer ausgebildete Querfördereinrichtungen aufweist, die wahlweise zwischen einer Arbeitsstellung und einer Transportstellung verlagerbar sind. Die Aufnahmeorgane und die Querfördereinrichtungen sind mittels Querträgern an beiden Seiten eines Längsträgers angeordnet, der ein Fahrwerk mit Rädern aufweist, und können über horizontale Achsen aus der im Wesentlichen vertikalen Transportstellung in eine im Wesentlichen horizontale Zwischenposition verlagert werden. Aus der Zwischenposition können die Aufnahmeorgane und die Querfördereinrichtungen über vertikal verlaufende Achsen in die Arbeitsposition verlagert werden.

Dann, wenn im Erntebetrieb der Merger oder Pick-up-Schwader gegen ein Hindernis stößt und das Hindernis eine entgegen der Ernterichtung wirkende Kraft auf die Aufnahmeorgane und/oder die Querfördereinrichtungen ausübt, kann der Merger oder Pick-up-Schwader beschädigt werden. Dies ist von Nachteil. Bislang bereitet es Schwierigkeiten, an einem Merger oder Pick-up-Schwader derartige Beschädigungen zu vermeiden. Es besteht daher Bedarf an einer als Merger oder Pick-up-Schwader ausgebildeten Erntevorrichtung, bei welcher die Gefahr von Beschädigungen im Erntebetrieb infolge von Hindernissen, gegen welche die Erntevorrichtung fährt bzw. stößt, reduziert ist.

Hiervon ausgehend liegt der vorliegenden Erfindung die Aufgabe zugrunde, eine neuartige, als Merger oder Pickup-Schwader ausgebildete, Erntevorrichtung zu schaffen.

Diese Aufgabe wird durch eine Erntevorrichtung nach Anspruch 1 gelöst.

Die Erntevorrichtung weist einen Tragrahmen mit einem Längsträger und Querträgern auf.

Die Erntevorrichtung weist ein Fahrwerk mit Rädern auf.

Die Erntevorrichtung weist als Pickup ausgebildete Aufnahmeorgane zum Aufnehmen von Erntegut und als Bandförderer ausgebildeten Querfördereinrichtungen zum Fördern des aufgenommenen Ernteguts in einer quer zu einer Längsrichtung verlaufenden Querförderrichtung auf. An einer ersten Seite und an einer zweiten Seite des Längsträgers sind jeweils ein Aufnahmeorgan und jeweils eine Querfördereinrichtung angeordnet.

Ein an der jeweiligen Seite des Längsträgers angeordneter, das jeweilige Aufnahmeorgan und die jeweilige Querfördereinrichtung aufnehmender, erster verlagerbarer Querträger ist um eine sich in vertikaler Hochrichtung erstreckende Achse relativ zu einem zweiten verlagerbaren Querträger und ferner mit dem zweiten verlagerbaren Querträger um eine sich in horizontaler Längsrichtung erstreckende Achse relativ zu einem am Längsträger angreifenden feststehenden Querträger verlagerbar.

Zwischen den an der jeweiligen Seite des Längsträgers angeordneten ersten und zweiten verlagerbaren Querträgern ist eine jeweilige erste Überlastungsschutzeinrichtung positioniert, die dann, wenn eine Kraft, die entgegen der Ernterichtung auf das jeweilige Aufnahmeorgan und/oder die jeweilige Querfördereinrichtung und/oder den jeweiligen ersten Querträger einwirkt, einen Grenzwert überschreitet, auslöst und ein Verlagern des jeweiligen Aufnahmeorgans und der jeweiligen Querfördereinrichtung um die sich in vertikaler Hochrichtung erstreckende Achse nach hinten entgegengesetzt zur Ernterichtung zulässt.

Die jeweilige erste Überlastschutzvorrichtung, die an der jeweiligen Seite des Längsträgers des Tragrahmens zwischen dem jeweiligen ersten verlagerbaren Querträger des Tragrahmens und dem jeweiligen zweiten verlagerbaren Querträger des Tragrahmens angeordnet ist, erlaubt ein Ausweichen des an der jeweiligen Seite angeordneten Aufnahmeorgans sowie der jeweiligen Querfördereinrichtung entgegengesetzt zur Ernterichtung nach hinten, um die sich in vertikaler Hochrichtung erstreckende Achse.

Sollte demnach die als Merger oder Pick-up-Schwader ausgebildete Erntevorrichtung gegen ein Hindernis fahren bzw. stoßen und hierdurch eine Kraft entgegengesetzt der Ernterichtung auf das jeweilige Aufnahmeorgan und/oder die jeweilige Querfördereinrichtung und/oder den jeweiligen ersten Querträger einwirken, die größer als der Grenzwert ist, so löst dann die jeweilige erste Überlastschutzvorrichtung aus und lässt das Verlagern des jeweiligen Aufnahmeorgans und der jeweiligen Querfördereinrichtung um die jeweilige, sich in vertikaler Richtung erstreckende Achse nach hinten zu. Hierdurch wird die Beschädigungsgefahr für die Aufnahmeorgane und Querfördereinrichtungen der Erntevorrichtung deutlich reduziert.

Nach einer vorteilhaften Weiterbildung sind dann, wenn die jeweilige erste Überlastungsschutzeinrichtung auslöst und ein Verlagern des jeweiligen Aufnahmeorgans und der jeweiligen Querfördereinrichtung um die sich in vertikaler Hochrichtung erstreckende Achse nach hinten entgegengesetzt zur Ernterichtung zulässt, das jeweilige Aufnahmeorgan und die jeweilige Querfördereinrichtung automatisch auch um die sich in horizontaler Längsrichtung erstreckende Achse nach oben verlagerbar. Diese ist besonders bevorzugt, um die Beschädigungsgefahr für die Aufnahmeorgane und Querfördereinrichtungen weiter zu reduzieren.

Dann, wenn die jeweilige erste Überlastschutzvorrichtung auslöst, sind die Aufnahmeorgane und die Querfördereinrichtungen automatisch nach oben verlagerbar, und zwar um die jeweilige sich in horizontaler Längsrichtung erstreckende Achse, die zwischen dem jeweiligen zweiten, verlagerbaren Querträger und dem jeweiligen feststehenden Querträger ausgebildet ist.

Vorzugsweise ist zwischen dem an der jeweiligen Seite des Längsträgers angeordneten zweiten verlagerbaren Querträger und dem jeweiligen feststehenden Querträger ein Aktuator positioniert, der dann, wenn die jeweilige erste Überlastungsschutzeinrichtung auslöst, das jeweilige Aufnahmeorgan und die jeweilige Querfördereinrichtung automatisch um die sich in horizontaler Längsrichtung erstreckende Achse nach oben verlagert. Über den Aktuator kann bei Auslösen der jeweiligen ersten Überlastschutzvorrichtung die jeweilige Querfördereinrichtung zusammen mit dem jeweiligen Aufnahmeorgan besonders bevorzugt nach oben verlagert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Draufsicht auf eine Anordnung aus einem Zugfahrzeug und einer als Merger oder Pickup-Schwader ausgebildete Erntevorrichtung in einer Arbeitsstellung;
- Fig. 2: die Anordnung der Fig. 1 beim Anfahren oder Überfahren eines Hindernisses in Draufsicht;
- Fig. 3: die Anordnung der Fig. 1, 2 beim Anfahren oder Überfahren eines Hindernisses in Rückansicht.

Die Erfindung betrifft eine als Merger ausgebildete Erntevorrichtung. Eine solche Erntevorrichtung wird auch als Pickup-Schwader bezeichnet.

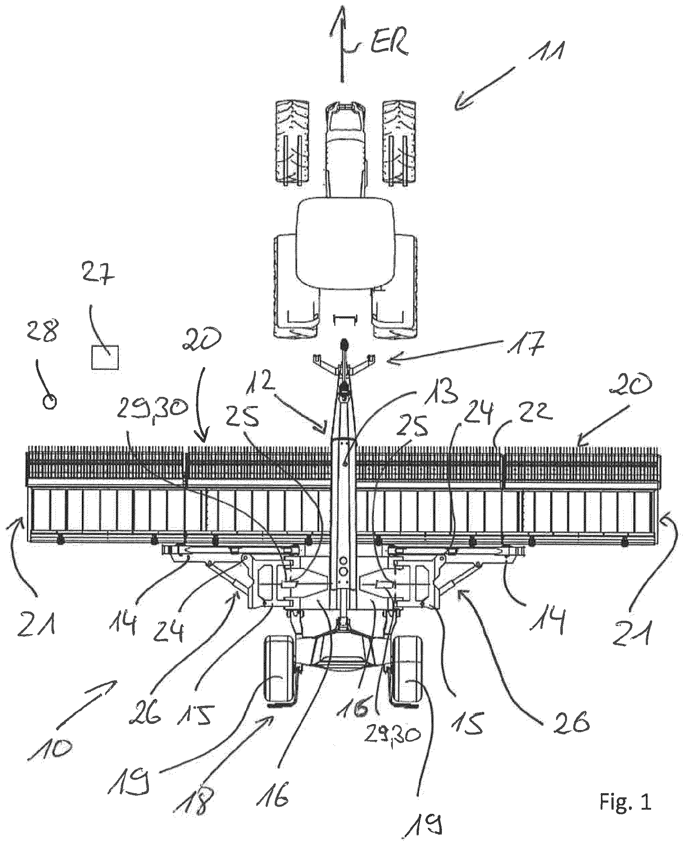

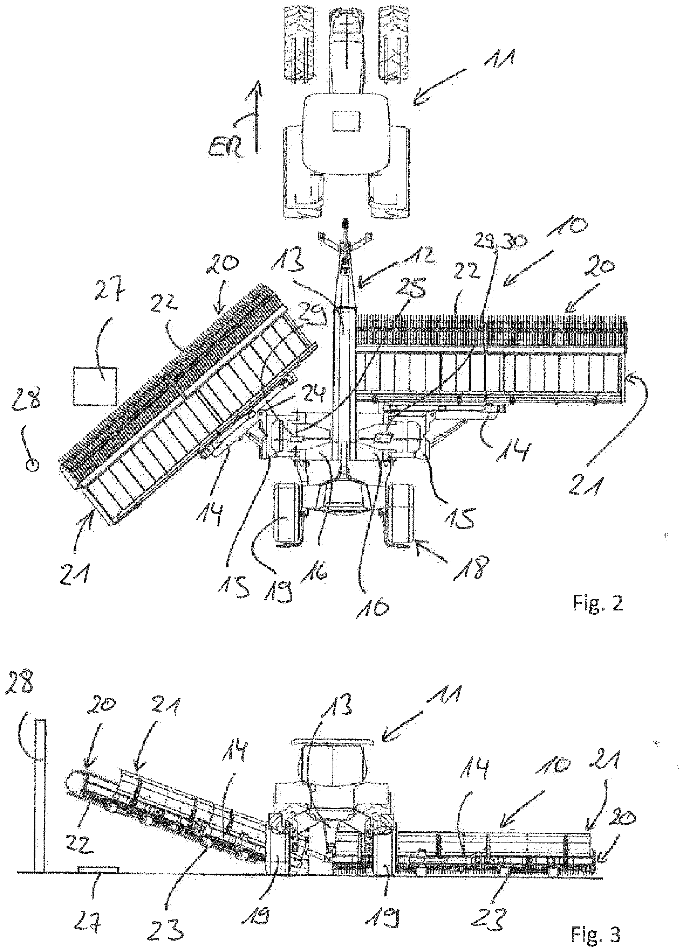

Fig. 1 und 2 zeigen eine Erntevorrichtung 10 in Arbeitsstellung zusammen mit einem Zugfahrzeug 11. Die Erntevorrichtung 10 verfügt über einen Tragrahmen 12 mit einem Längsträger 13 sowie Querträgern 14, 15, 16. Über den Längsträger 13, nämlich eine am vorderen Ende des Längsträgers 13 ausgebildete Kupplungseinrichtung 17, ist die Erntevorrichtung 10 an das Zugfahrzeug 11 ankoppelbar, um vom Zugfahrzeug 11 entlang eines zu bearbeitenden Untergrunds gezogen zu werden. Der Längsträger 13 erstreckt sich dabei in Zugrichtung bzw. Ernterichtung ER.

Die Querträger 14, 15, 16 erstrecken sich in der Arbeitsstellung der Erntevorrichtung 10 quer oder senkrecht zum Längsträger 13 und damit Ernterichtung ER.

Die Erntevorrichtung 10 verfügt weiterhin über ein Fahrwerk 18 mit Rädern 19. Das Fahrwerk 18 wird auch als Hauptfahrwerk bezeichnet. Über die Räder 19 des Fahrwerks 18 stützt sich sowohl in der Arbeitsstellung als auch in einer Transportstellung die als Merger ausgebildete Erntevorrichtung 10 auf einem zu bearbeitenden bzw. zu befahrenden Untergrund ab.

Die Erntevorrichtung 10 verfügt weiterhin über Aufnahmeorgane 20 sowie Querfördereinrichtungen 21.

Die Aufnahmeorgane 20 sind als sogenannte Pickup ausgebildet und dienen dem Aufnehmen von Erntegut vom zu bearbeitenden Untergrund. An einer ersten Seite des Längsträgers 13 ist ein erstes Aufnahmeorgan 20 an einem jeweiligen ersten Querträger 14 aufgenommen. An einer zweiten Seite des Längsträgers 13 ist ein zweites Aufnahmeorgan 20 an dem jeweiligen ersten Querträger 14 aufgenommen. Die Aufnahmeorgane 20 verfügen über Aufnahmezinken 22, die zum Aufnehmen des Ernteguts vom Boden um eine sich in Querrichtung erstreckende Achse angetrieben werden. Jedes der Aufnahmeorgane 20 stützt sich in der Arbeitsstellung der Erntevorrichtung 10 über Tasträder 23 auf dem zu bearbeitenden Untergrund ab.

Wie bereits ausgeführt, verfügt die Erntevorrichtung 10 zusätzlich zu den Aufnahmeorganen 20 über die Querfördereinrichtungen 21. Die Querfördereinrichtungen 21 sind als Bandförderer ausgebildet, wobei über die Querfördereinrichtungen 21 das über die Aufnahmeorgane 20 vom zu bearbeitenden Untergrund aufgenommene Erntegut in einer sich zur Längsrichtung quer bzw. senkrecht erstreckenden Querförderrichtung transportierbar ist. An der ersten Seite des Längsträgers 13 ist eine erste Querfördereinrichtung 21 zusammen mit der jeweiligen Aufnahmeeinrichtung 20 an dem jeweiligen ersten Querträger 14 aufgenommen. An der zweiten Seite des Längsträgers 13 ist eine zweite Querfördereinrichtung 21 zusammen mit der jeweiligen Aufnahmeeinrichtung 20 an dem jeweiligen ersten Querträger 14 aufgenommen.

Wie den Zeichnungen entnommen werden kann, sind in Ernterichtung ER gesehen die Querfördereinrichtungen 21 hinter den Aufnahmeorganen 20 angeordnet.

Die ersten Querträger 14, an welchen die Aufnahmeorgane 20 und die Querfördereinrichtungen 21 aufgenommen sind, sind um jeweils eine sich in vertikaler Hochrichtung erstreckende Achse 24 relativ zu einem zweiten Querträger 15 verlagerbar. Die zweiten Querträgern 15 sind ihrerseits jeweils um eine sich in horizontaler Längsrichtung erstreckende Achse 25 zu einem dritten Querträger 16 verlagerbar. Die dritten Querträger 16 greifen fest am Längsträger 13 an.

An jeder Seite des Längsträgers 13 sind demnach jeweils ein Aufnahmeorgan 20 und jeweils eine Querfördereinrichtung 21 angeordnet.

Der an einer jeweiligen Seite des Längsträgers 13 angeordnete erste verlagerbare Querträger 14 nimmt das jeweilige Aufnahmeorgan 20 und die jeweilige Querfördereinrichtung 21 auf.

Dieser das jeweilige Aufnahmeorgan 20 und die jeweilige Querfördereinrichtung 21 aufnehmende, erste verlagerbare Querträger 14 ist um die jeweilige sich in vertikaler Hochrichtung erstreckende Achse 24 relativ zu dem jeweiligen zweiten verlagerbaren Querträger 15 verlagerbar, nämlich nach hinten schwenkbar bzw. klappbar.

Ferner ist der jeweilige erste verlagerbare Querträger 14 mit dem jeweiligen zweiten verlagerbaren Querträger 15 um die sich in horizontaler Längsrichtung erstreckende Achse 25 relativ zu dem jeweiligen feststehenden Querträger 16 verlagerbar, der am Längsträger 13 unverlagerbar angreift. Diese Verlagerbarkeit um die sich in horizontaler Längsrichtung erstreckende Achse 25 entspricht einer Klappbewegung des jeweiligen Aufnahmeorgans 20 und der jeweiligen Querfördereinrichtung 21 nach oben.

Bei der erfindungsgemäßen Erntevorrichtung 10 ist zwischen den an der jeweiligen Seite des Längsträgers 13 angeordneten ersten und zweiten verlagerbaren Querträgern 14 und 15 eine jeweilige erste Überlastungsschutzeinrichtung 26 positioniert.

Diese jeweilige erste Überlastungsschutzeinrichtung 26 der als Merger oder Pickup-Schwader ausgebildeten Erntevorrichtung löst dann, wenn eine Kraft, die entgegen der Ernterichtung ER auf das jeweilige Aufnahmeorgan 20 und/oder die jeweilige Querfördereinrichtung 21 und/oder den jeweiligen ersten Querträger 14 einwirkt, größer als ein vorgegebener Grenzwert ist, aus.

Die ausgelöste erste Überlastungsschutzeinrichtung 26 lässt dann ein Verlagern des jeweiligen Aufnahmeorgans 20 und der jeweiligen Querfördereinrichtung 21 zusammen mit dem jeweiligen ersten verlagerbaren Querträger 14 um die sich in vertikaler Hochrichtung erstreckende Achse 24 nach hinten entgegengesetzt zur Ernterichtung zu.

Fährt also im Erntebetrieb die Erntevorrichtung 10 gegen ein Hindernis und/oder wird gegen ein Hindernis gezogen und übt dieses Hindernis entgegen der Ernterichtung auf das jeweilige Aufnahmeorgan 20 und/oder die jeweilige Querfördereinrichtung 21 und/oder den jeweiligen ersten Querträger 14 eine unzulässig hohe Kraft aus, so löst die jeweilige erste Überlastungsschutzeinrichtung 26 aus und lässt die automatische Verlagerung des jeweiligen Aufnahmeorgans 20 und der jeweiligen Querfördereinrichtung 21 zusammen mit dem jeweiligen ersten verlagerbaren Querträger 14 aus der in Fig. 1 gezeigten Arbeitsstellung heraus nach hinten entgegen der Ernterichtung ER zu, wie dies in Fig. 2 für das auf der linken Seite des Längsträgers 13 positionierte Aufnahmeorgan 20 und die entsprechende Querfördereinrichtung 21 gezeigt ist. Fig. 1 bis 3 zeigen dabei mögliche Hindernisse 27, 28, die unterschiedlich hoch gegenüber dem zu bearbeitenden Untergrund in vertikaler Richtung vorstehen.

Bei der jeweiligen ersten Überlastungsschutzeinrichtung 26 handelt es sich im gezeigten Ausführungsbeispiel um einen Überlastschutzzylinder, der dann, wenn der im Zylinder wirkende Druck einen Grenzwert überschreitet, automatisch auslöst bzw. öffnet.

Alternativ kann es sich bei der jeweiligen ersten Überlastungsschutzeinrichtung 26 auch um eine Überlastschutzstrebe handeln, die mechanisch entlang einer Sollbruchstelle nachgibt.

Nach einer besonders vorteilhaften Weiterbildung der Erfindung ist vorgesehen, dass dann, wenn die jeweiligen erste Überlastschutzeinrichtung 26 auslöst und ein Verlagern des jeweiligen Aufnahmeorgans 20 und der jeweiligen Querfördereinrichtung 21 zusammen mit dem jeweiligen ersten verlagerbaren Querträger 14 um die sich in vertikaler Hochrichtung erstreckende Achse 24 nach hinten zulässt, das jeweilige Aufnahmeorgan 20 und die jeweilige Querfördereinrichtung 21 zusammen mit dem jeweiligen ersten verlagerbaren Querträger 14 automatisch auch um die sich in horizontaler Längsrichtung erstreckende Achse 25 nach oben verlagerbar sind. In diesem Fall wird dann das jeweilige Aufnahmeorgan 20 zusammen mit der jeweiligen Querfördereinrichtung 21 automatisch dann nach oben verlagert, wenn eine entgegen der Ernterichtung auf das jeweilige Aufnahmeorgan 20 und/oder die jeweilige Querfördereinrichtung 21 und/oder den jeweiligen Querträger 14 einwirkende Kraft größer als ein Grenzwert ist.

Hierzu ist dann insbesondere vorgesehen, dass zwischen dem an der jeweiligen Seite des Längsträgers 13 angeordneten zweiten verlagerbaren Querträger 15 und dem jeweiligen feststehenden Querträger 16 ein Aktuator 29 angeordnet ist, mit welchem der jeweilige zweite verlagerbare Querträger 15 relativ zum jeweiligen feststehenden Querträger 16 und damit auch der jeweilige erste verlagerbare Querträger 14 zusammen mit dem an demselben aufgenommenen Aufnahmeorgan 20 und der jeweiligen Querfördereinrichtung 21 nach oben um die sich in horizontaler Längsrichtung erstreckende Achse 25 nach oben verlagerbar ist.

Bei diesem Aktuator 29 handelt es sich vorzugsweise um einen Betätigungszylinder, wie einen hydraulischen Betätigungszylinder.

Es kann vorgesehen sein, in diesen Aktuator 29 eine zweite Überlastschutzeinrichtung 30 zu integrieren, die dann, wenn eine Kraft, die in vertikaler Richtung auf das jeweilige Aufnahmeorgan 20 und/oder die jeweilige Querfördereinrichtung 21 und/oder den jeweiligen ersten oder zweiten Querträger 14, 15 einwirkt, größer als ein Grenzwert ist, auslöst und dann ein Verlagern des jeweiligen Aufnahmeorgans 20 und der jeweiligen Querfördereinrichtung 21 um die sich in horizontaler Längsrichtung erstreckende Achse 25 nach oben zulässt.

Mit der Erfindung kann verhindert werden, dass eine als Merger oder Pick-up-Schwader ausgebildete Erntevorrichtung bei einem Kontakt mit einem gegenüber einem zu bearbeitenden Untergrund vorstehenden Hindernis und einer hierdurch ausgeübten Kraft auf ein Aufnahmeorgan und/oder eine Querfördereinrichtung und/oder einen das Aufnahmeorgan und die Querfördereinrichtung aufnehmenden Querträger beschädigt wird.

Es ist selbstverständlich, dass die jeweilige erste Überlastschutzeinrichtung 26 nur dann auslösen kann, wenn die entgegengesetzt zur Ernterichtung ER wirkende Kraft in einem Ansprechbereich auf das jeweilige Aufnahmeorgan 20 und/oder die jeweilige Querfördereinrichtung 21 und/oder den diese Baugruppen aufnehmenden Querträger 14 einwirkt, der zwischen der jeweiligen vertikalen Achse 24 und dem jeweiligen seitlichen Ende der Erntevorrichtung liegt.

### Bezugszeichenliste

- 10: Erntevorrichtung
- 11: Zugfahrzeug
- 12: Tragrahmen
- 13: Längsträger
- 14: Querträger
- 15: Querträger
- 16: Querträger
- 17: Kupplungseinrichtung
- 18: Fahrwerk
- 19: Rad
- 20: Aufnahmeorgane
- 21: Querfördereinrichtung
- 22: Aufnahmezinken
- 23: Tastrad
- 24: Achse
- 25: Achse
- 26: Überlastungsschutzeinrichtung
- 27: Hindernis
- 28: Hindernis
- 29: Aktuator
- 30: Überlastungsschutzeinrichtung

## Patentansprüche

1. Erntevorrichtung (10), nämlich Merger oder Pickup-Schwader,
mit einem einen Längsträger (13) und Querträger (14, 15, 16) aufweisenden Tragrahmen (12),
mit einem Räder (19) aufweisenden Fahrwerk (18),
mit als Pickup ausgebildeten Aufnahmeorganen (20) zum Aufnehmen von Erntegut und mit als Bandförderer ausgebildeten Querfördereinrichtungen (21) zum Fördern des aufgenommenen Ernteguts in einer quer zu einer Längsrichtung verlaufenden Querförderrichtung,
wobei an einer ersten Seite und an einer zweiten Seite des Längsträgers (13) jeweils ein Aufnahmeorgan (20) und jeweils eine Querfördereinrichtung (21) angeordnet sind,
wobei ein an der jeweiligen Seite des Längsträgers (13) angeordneter, das jeweilige Aufnahmeorgan (20) und die jeweilige Querfördereinrichtung (21) aufnehmender, erster verlagerbarer Querträger (14) um eine sich in vertikaler Hochrichtung erstreckende Achse (24) relativ zu einem zweiten verlagerbaren Querträger (15) und ferner mit dem zweiten verlagerbaren Querträger (15) um eine sich in horizontaler Längsrichtung erstreckende Achse (25) relativ zu einem am Längsträger (13) angreifenden feststehenden Querträger (16) verlagerbar ist,
**dadurch gekennzeichnet, dass** zwischen den an der jeweiligen Seite des Längsträgers (13) angeordneten ersten und zweiten verlagerbaren Querträgern (14, 15) eine jeweilige erste Überlastungsschutzeinrichtung (26) positioniert ist, die dann, wenn eine Kraft, die in horizontaler Richtung entgegen der Ernterichtung auf das jeweilige Aufnahmeorgan (20) und/oder die jeweilige Querfördereinrichtung (21) und/oder den jeweiligen ersten Querträger (14) einwirkt, einen Grenzwert überschreitet, auslöst und ein Verlagern des jeweiligen Aufnahmeorgans (20) und der jeweiligen Querfördereinrichtung (21) um die sich in vertikaler Hochrichtung erstreckende Achse (24) nach hinten entgegengesetzt zur Ernterichtung zulässt.

2. Erntevorrichtung nach Anspruch 1, **dadurch gekennzeichnet, dass** die jeweilige erste Überlastungsschutzeinrichtung (26) eine Überlastungsschutzstrebe oder ein Überlastungsschutzzylinder ist.

3. Erntevorrichtung nach Anspruch 1 oder 2, **dadurch gekennzeichnet, dass** zwischen dem an der jeweiligen Seite des Längsträgers (13) angeordneten zweiten verlagerbaren Querträgern (15) und dem jeweiligen feststehenden Querträger (16) eine jeweilige zweite Überlastungsschutzeinrichtung (30) positioniert ist, die dann, wenn eine Kraft, die in vertikaler Richtung auf das jeweilige Aufnahmeorgan (20) und/oder die jeweilige Querfördereinrichtung (21) und/oder den jeweiligen ersten und/oder zweiten Querträger (14, 15) einwirkt, einen Grenzwert überschreitet, auslöst und ein Verlagern des jeweiligen Aufnahmeorgans (20) und der jeweiligen Querfördereinrichtung (21) um die sich in horizontaler Längsrichtung erstreckende Achse (25) nach oben zulässt.

4. Erntevorrichtung nach Anspruch 3, **dadurch gekennzeichnet, dass** die jeweilige zweite Überlastungsschutzeinrichtung (30) eine Überlastungsschutzstrebe oder ein Überlastungsschutzzylinder ist.

5. Erntevorrichtung nach einem der Ansprüche 1 bis 4, **dadurch gekennzeichnet, dass** dann, wenn die jeweilige erste Überlastungsschutzeinrichtung (26) auslöst und ein Verlagern des jeweiligen Aufnahmeorgans (20) und der jeweiligen Querfördereinrichtung (21) um die sich in vertikaler Hochrichtung erstreckende Achse (24) nach hinten entgegengesetzt zur Ernterichtung zulässt, das jeweilige Aufnahmeorgan (20) und die jeweilige Querfördereinrichtung (21) automatisch auch um die sich in horizontaler Längsrichtung erstreckende Achse (25) nach oben verlagerbar sind.

6. Erntevorrichtung nach Anspruch 5, **dadurch gekennzeichnet, dass** zwischen dem an der jeweiligen Seite des Längsträgers (13) angeordneten zweiten verlagerbaren Querträger (15) und dem jeweiligen feststehenden Querträger (16) ein Aktuator (29) positioniert ist, der dann, wenn die jeweilige erste Überlastungsschutzeinrichtung (26) auslöst, das jeweilige Aufnahmeorgan (20) und die jeweilige Querfördereinrichtung (21) automatisch um die sich in horizontaler Längsrichtung erstreckende Achse (25) nach oben verlagert.

7. Erntevorrichtung nach Anspruch 6, **dadurch gekennzeichnet, dass** der jeweilige Aktuator (29) ein Betätigungszylinder ist.

## Claims

1. Harvesting apparatus (10), namely merger or pickup swather,
with a supporting frame (12) having a longitudinal member (13) and crossmembers (14, 15, 16),
with a chassis (18) having wheels (19),
with pickup members (20) designed as a pickup for picking up harvested crop, and with transverse conveyor devices (21) designed as belt conveyors for conveying the picked-up harvested crop in a transverse conveying direction running transversely with respect to a longitudinal direction,
wherein a respective pickup member (20) and a respective transverse conveyor device (21) are arranged on a first side and on a second side of the longitudinal member (13),
wherein a first shiftable crossmember (14) which is arranged on the respective side of the longitudinal member (13) and accommodates the respective pickup member (20) and the respective transverse conveyor device (21) is shiftable about an axis (24) extending in a vertical height direction relative to a second shiftable crossmember (15) and is furthermore shiftable via the second shiftable crossmember (15) about an axis (25) extending in the horizontal longitudinal direction relative to a fixed crossmember (16) acting on the longitudinal member (13),
**characterized in that** a respective first overload protection device (26) is positioned between the first and second shiftable crossmembers (14, 15) arranged on the respective side of the longitudinal member (13), said overload protection device triggering when a force which acts on the respective pickup member (20) and/or the respective transverse conveyor device (21) and/or the respective first crossmember (14) in a horizontal direction counter to the harvesting direction exceeds a limit value and permitting shifting of the respective pickup member (20) and of the respective transverse conveyor device (21) about the axis (24) extending in a vertical height direction rearwards in the opposite direction to the harvesting direction.

2. Harvesting apparatus according to Claim 1,
**characterized in that** the respective first overload protection device (26) is an overload protection strut or an overload protection cylinder.

3. Harvesting apparatus according to Claim 1 or 2,
**characterized in that** a respective second overload protection device (30) is positioned between the second shiftable crossmembers (15) arranged on the respective side of the longitudinal member (13) and the respective fixed crossmember (16), said second overload protection device triggering when a force which acts on the respective pickup member (20) and/or the respective transverse conveyor device (21) and/or the respective first and/or second crossmember (14, 15) in the vertical direction exceeds a limit value and permitting shifting of the respective pickup member (20) and of the respective transverse conveyor device (21) upwards about the axis (25) extending in a horizontal longitudinal direction.

4. Harvesting apparatus according to Claim 3,
**characterized in that** the respective second overload protection device (30) is an overload protection strut or an overload protection cylinder.

5. Harvesting apparatus according to one of Claims 1 to 4, **characterized in that** when the respective first overload protection device (26) triggers and permits shifting of the respective pickup member (20) and of the respective transverse conveyor device (21) about the axis (24) extending in a vertical height direction rearwards in the opposite direction to the harvesting direction, the respective pickup member (20) and the respective transverse conveyor device (21) are automatically also shiftable upwards about the axis (25) extending in a horizontal longitudinal direction.

6. Harvesting apparatus according to Claim 5,
**characterized in that** an actuator (29) is positioned between the second shiftable crossmember (15) arranged on the respective side of the longitudinal member (13) and the respective fixed crossmember (16), said actuator, when the respective first overload protection device (26) triggers, automatically shifting the respective pickup member (20) and the respective transverse conveyor device (21) upwards about the axis (25) extending in a horizontal longitudinal direction.

7. Harvesting apparatus according to Claim 6,
**characterized in that** the respective actuator (29) is an actuating cylinder.

## Revendications

1. Dispositif de récolte (10), à savoir andaineuse de regroupement ou de ramassage,
avec un cadre porteur (12) présentant un longeron (13) et des traverses (14, 15, 16),
avec un châssis (18) présentant des roues (19),
avec des organes de réception (20) réalisés sous forme de ramasseur pour recevoir le produit récolté et avec des appareils de transport transversal (21) réalisés sous forme de transporteur à bande pour transporter le produit récolté reçu dans une direction de transport transversal s'étendant transversalement à une direction longitudinale,
un organe de réception (20) et un appareil de transport transversal (21) étant agencés respectivement sur un premier côté et sur un deuxième côté du longeron (13),
une première traverse déplaçable (14), agencée sur le côté respectif du longeron (13), recevant l'organe de réception respectif (20) et l'appareil de transport transversal respectif (21), pouvant être déplacée autour d'un axe (24) s'étendant dans la direction verticale vers le haut par rapport à une deuxième traverse déplaçable (15) et la deuxième traverse déplaçable (15) pouvant en outre être déplacée autour d'un axe (25) s'étendant dans la direction longitudinale horizontale par rapport à une traverse fixe (16) agissant sur le longeron (13),
**caractérisé en ce qu'**entre les première et deuxième traverses déplaçables (14, 15) agencées sur le côté respectif du longeron (13) est positionné un premier appareil de protection contre les surcharges respectif (26) qui se déclenche lorsqu'une force qui agit dans la direction horizontale à l'encontre de la direction de récolte sur l'organe de réception respectif (20) et/ou l'appareil de transport transversal respectif (21) et/ou la première traverse respective (14) dépasse une valeur limite, et permet un déplacement de l'organe de réception respectif (20) et de l'appareil de transport transversal respectif (21) autour de l'axe (24) s'étendant dans la direction verticale vers le haut, vers l'arrière à l'encontre de la direction de récolte.

2. Dispositif de récolte selon la revendication 1, **caractérisé en ce que** le premier appareil de protection contre les surcharges respectif (26) est une barre de protection contre les surcharges ou un cylindre de protection contre les surcharges.

3. Dispositif de récolte selon la revendication 1 ou 2, **caractérisé en ce qu'**un deuxième appareil de protection contre les surcharges (30) respectif est positionné entre la deuxième traverse déplaçable (15) agencée sur le côté respectif du longeron (13) et la traverse fixe respective (16), lequel se déclenche lorsqu'une force qui agit dans la direction verticale sur l'organe de réception respectif (20) et/ou l'appareil de transport transversal respectif (21) et/ou la première et/ou la deuxième traverse respective (14, 15) dépasse une valeur limite, et permet un déplacement vers le haut de l'organe de réception respectif (20) et de l'appareil de transport transversal respectif (21) autour de l'axe (25) s'étendant dans la direction longitudinale horizontale.

4. Dispositif de récolte selon la revendication 3, **caractérisé en ce que** le deuxième appareil de protection contre les surcharges (30) est une barre de protection contre les surcharges ou un cylindre de protection contre les surcharges.

5. Dispositif de récolte selon l'une quelconque des revendications 1 à 4, **caractérisé en ce que**, lorsque le premier appareil de protection contre les surcharges respectif (26) se déclenche et permet un déplacement de l'organe de réception respectif (20) et de l'appareil de transport transversal respectif (21) vers l'arrière autour de l'axe (24) s'étendant dans la direction verticale vers le haut, à l'encontre de la direction la récolte, l'organe de réception respectif (20) et l'appareil de transport transversal respectif (21) peuvent également être déplacés automatiquement vers le haut autour de l'axe (25) s'étendant dans la direction horizontale longitudinale.

6. Dispositif de récolte selon la revendication 5, **caractérisé en ce qu'**un actionneur (29) est positionné entre la deuxième traverse déplaçable (15) agencée sur le côté respectif du longeron (13) et la traverse fixe respective (16), lequel, lorsque le premier appareil de protection contre les surcharges respectif (26) se déclenche, déplace automatiquement l'organe de réception respectif (20) et l'appareil de transport transversal respectif (21) vers le haut autour de l'axe (25) s'étendant dans la direction longitudinale horizontale.

7. Dispositif de récolte selon la revendication 6, **caractérisé en ce que** l'actionneur respectif (29) est un cylindre d'actionnement.
